(19) Europäisches Patentamt

European Patent Office

Office européen des brevets

(11) Veröffentlichungsnummer: **0 285 594 B1**

(12) **EUROPÄISCHE PATENTSCHRIFT**

(45) Veröffentlichungstag der Patentschrift: **13.04.94**

(21) Anmeldenummer: **88890017.2**

(22) Anmeldetag: **27.01.88**

(51) Int. Cl.⁵: **H02H 3/33**

(54) Fehlerstromschutzschalter mit Kurzzeitverzögerung.

(30) Priorität: **02.04.87 AT 807/87**

(43) Veröffentlichungstag der Anmeldung:
**05.10.88 Patentblatt 88/40**

(45) Bekanntmachung des Hinweises auf die
Patenterteilung:
**13.04.94 Patentblatt 94/15**

(84) Benannte Vertragsstaaten:
**BE DE ES FR GB GR IT LU NL**

(56) Entgegenhaltungen:
**WO-A-86/06222       CH-A- 656 262
DE-A- 3 029 453       FR-A- 2 191 319
GB-A- 2 056 797       GB-A- 2 082 408**

**VDE 0664, Teil 1, Oktober 1985**

**ELECTRICAL INSTALLATIONS HANDBOOK,
Part 2, 1987, Siemens AG**

**E und M, Jhrg. 100, Heft 7, 1983**

**ÖZE, Jhrg. 30, Heft 2, 1977**

(73) Patentinhaber: **FELTEN & GUILLEAUME AUS-
TRIA AG**

**A-3943 Schrems-Eugenia 1(AT)**

Patentinhaber: **GEORGE H. SCHOLES PLC MA-
NUFACTURERS OF WYLEX ELECTRICAL PRO-
DUCTS
Wylex Works
Wythenshawe Manchester M22 4RA(GB)**

(72) Erfinder: **Biegelmeier, Gottfried, Prof. Ing. Dr.
phil.
Greingasse 30
A-1195 Wien(AT)**

(74) Vertreter: **Beer, Manfred, Dipl.-Ing. et al
Lindengasse 8
A-1070 Wien (AT)**

**Beschreibung**

Die Erfindung betrifft einen Fehlerstromschutzschalter, bestehend aus einem Gehäuse mit Anschlußklemmen für Installationsleitungen, in dem ein Kontaktapparat mit zugehörigem Schaltschloß, eine Prüfeinrichtung, ein Betätigungsorgan, ein Fehlerstromauslöser, ein Summenstromwandler und eine Elektronikschaltung untergebracht sind, wobei der Fehlerstromschutzschalter auslöst, wenn der Fehlerstrom das 0,5- bis 1,0-fache des Nennwertes des Auslösefehlerstromes überschreitet, und die Auslösekennlinie im wesentlichen dem physiologischen Reizgesetz I x t = konstant (I = Auslösefehlerstrom, t = Gesamtausschaltzeit) folgt.

Anstoß zur Erfindung gibt die Notwendigkeit, Fehlerstromschutzschalter für den Zusatzschutz, die also auch beim direkten Berühren von aktiven Teilen und Erde durch einen Menschen schützen sollen, und einen Nennwert des Auslösefehlerstromes ($I_{\Delta n}$) von höchstens 30 mA besitzen, so zu bauen, daß sie gegenüber Fehlerstromschutzschaltern der selektiven Bauform selektiv bleiben, anderseits aber unnötige Fehlauslösungen vermieden werden. Auch eine gewisse Selektivität gegenüber nachgeschalteten Überstromschutzorganen ist erwünscht (Biegelmeier, G.: Die langsame "schnelle Nullung", Bull. SEV/VSE 75- (1984), H.23, S. 1413-1417). Derzeit sind für Fehlerstromschutzschalter (= Fl-Schutzschalter) in den internationalen Normen, und in nationalen Normen, die in Tabelle 1 angegebene Abschaltzeiten vorgesehen.

Tabelle 1

| Auslöseströme und Abschaltzeiten von Fl-Schutzschaltern | | | |
|---|---|---|---|
| Fl-Schutzschalter | Abschaltzeiten (s) bei | | |
| Type<br>G (übliche Bauform)<br>S (selektive Bauform) | $I_{\Delta n}$<br><0,5<br>$0,13 \leq t \leq 0,5$ | $2xI_{\Delta n}$<br><0,2<br>$0,06 \leq t \leq 0,2$ | $5xI_{\Delta n}$<br><0,04<br>$0,05 \leq t \leq 0,15$ |

Man erkennt, daß für Fehlerstromschutzschalter der üblichen Bauform (G) keine unteren Grenzwerte für die Abschaltzeit vorgeschrieben sind. Tatsächlich beträgt die Auslösezeit der auf dem Markt befindlichen Schalter dieser Bauform nach Überschreiten der Auslösegrenze meist nur einige Millisekunden. Der Öffnungsverzug, der sich aus der Auslösezeit des Fehlerstromauslösers und der Eigenzeit des Schaltmechanismus zusammensetzt, liegt dann meistens unter 10 Millisekunden.

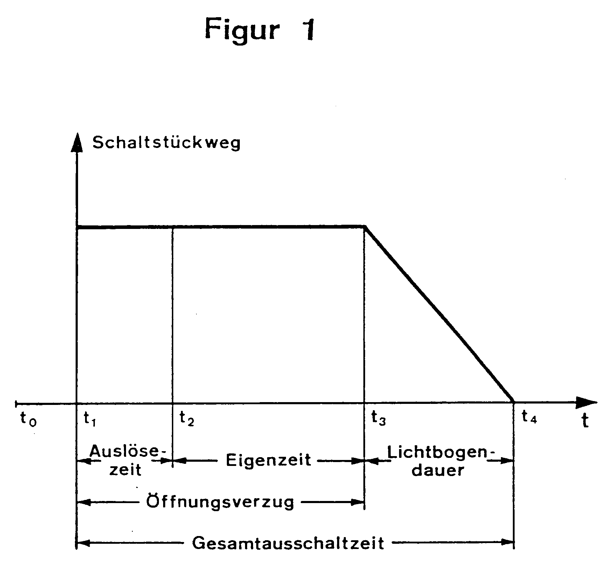

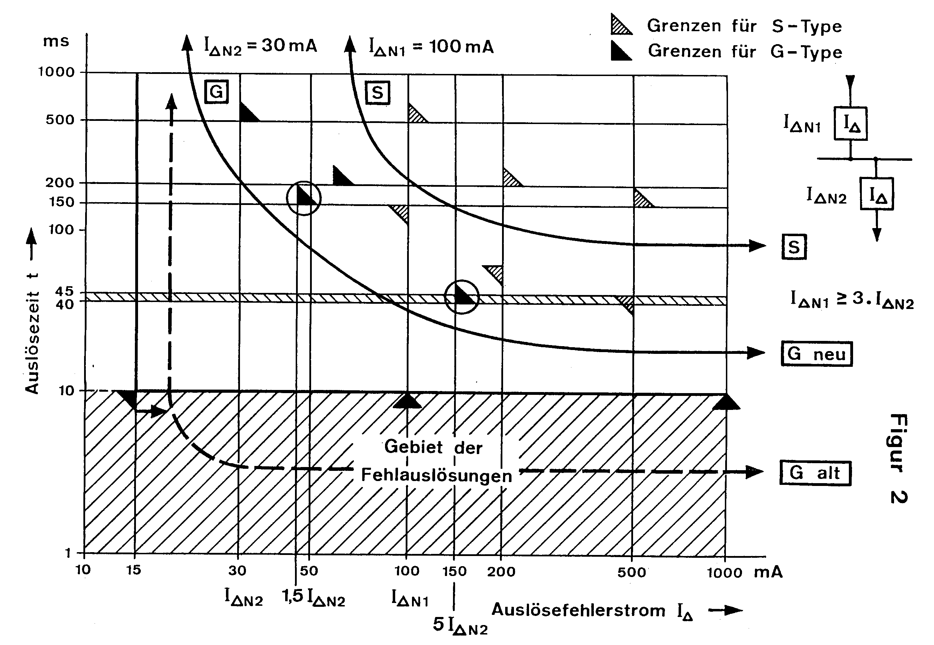

Der Zusammenhang zwischen Auslösezeit, Eigenzeit, Öffnungsverzug und Gesamtausschaltzeit (Abschaltzeit) ist in Fig. 1 dargestellt. Die vorgeschriebenen Auslöseströme und Abschaltzeiten nach Tabelle 1 für einen Fehlerstromschutzschalter der selektiven Bauform mit $I_{\Delta n}$ = 100 mA und für einen Schalter der üblichen Bauform mit $I_{\Delta n}$ = 30 mA sind zusammen mit den Kennlinien der Schalter in Fig. 2 wiedergegeben.

In der Fig. 2 ist auch die Selektivitätsbedingung eingetragen, die sicherstellt, daß im Fehlerfall immer der nachgeschaltete Fehlerstromschutzschalter üblicher Bauform auslöst. Sie lautet

$$I_{\Delta n1} \geq 3xI_{\Delta n2'}$$

in der $I_{\Delta n1}$ den Auslösestrom des vorgeschalteten Fehlerstromschutzschalters in selektiver Bauform und $I_{\Delta n2}$ den Auslösestrom des nachgeschalteten Fehlerstromschutzschalters ist.

Die Nichtvorgabe einer unteren Grenze für die Abschaltzeiten der Fehlerstromschutzschalter üblicher Bauform hat eine Reihe von entscheidenden Nachteilen. Der größte Nachteil besteht in Fehlauslösungen durch Fehlerströme, die durch Überspannungen entstehen können.

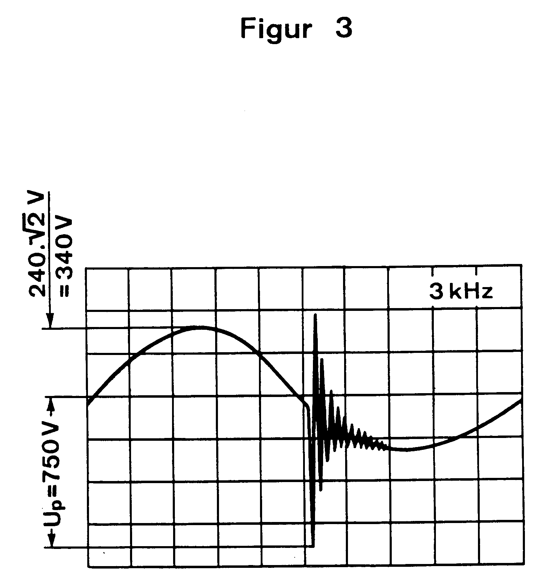

Überspannungen werden in Installationen u.a. durch Schalthandlungen und durch Gewitter erzeugt. Fig. 3 zeigt das Oszillogramm einer Überspannung, die durch Abschalten eines Motors entstanden ist und infolge der Leitungskapazitäten gegen Erde in Form einer gedämpften Schwingung gegen Erde auftritt. Durch die relativ hohe Frequenz von 3000 Hz wird die kapazitive Erdimpedanz der Leitungen stark herabgesetzt, so daß durch die Überspannung Fehlerströme beachtlicher Höhe mit einer Frequenz von 3000 Hz zur Erde fließen. Sie können, obwohl sie nur wenige Millisekunden dauern, einen Fehlerstromschutzschalter zum Fehlauslösen bringen. Ähnliche Erscheinungen werden beim Schalten von modernen Leuchtstoffleuchten beobachtet, die mit Mittelfrequenz betrieben werden (20.000 bis 30.000 Hz).

Viel häufiger sind jedoch die Fehlauslösungen, die durch Gewitterüberspannungen entstehen. Atmosphärische Entladungen verursachen sowohl in Freileitungsnetzen als auch in Kabelnetzen Überspannungen, die meist in Form von Stoßspannungen ähnlich der Form 1,2/50 µs auftreten. Sie können Scheitelwerte erreichen, die durch die Luftstrecken in den Installationen meist auf Werte unter 10 kV begrenzt werden. International wurden für Niederspannungsinstallationen Überspannungskategorien festgelegt, die von 6 kV für den Hausanschluß bis zu 1,5 kV für die elektrischen Betriebsmittel reichen. Der physikalische Vorgang einer derartigen Überspannungsbeanspruchung ist nun nicht, wie manchmal angenommen wird, so, daß die Überspannung zuerst den Zähler erreicht und erst später die letzte Steckdose am Leitungsende.

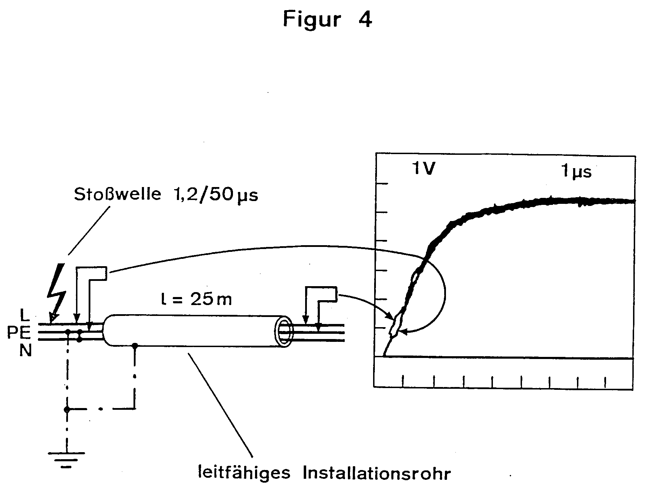

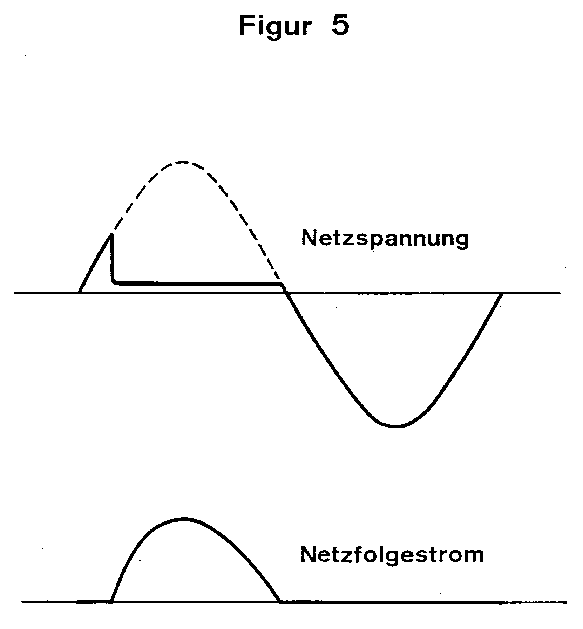

Tatsächlich steigt die Überspannung wegen der begrenzten Leitungslängen praktisch gleichzeitig in der gesamten Installation auf den Maximalwert an. Fig. 4 zeigt das Ergebnis entsprechender Messungen (Martzloff, F.D.: The propagation and attenuation of surge voltages and surge currents in low-voltage AC circuits, Paper 82SM4539 IEEE Power Summer Meeting 1982). Man erkennt, daß die Stoßspannung in gleicher Form am Anfang und am Ende der Leitung auftritt. In der Installation wird daher dort der Überschlag erfolgen, wo sich eine Schwachstelle der Luftstrecken befindet (z.B. abstehende Litze in einer Steckdose). Erfolgt der Überschlag, dann fließt zunächst infolge der Stoßspannung ein Stoßstrom meist ähnlich einer Form 8/20 µs zur Erde und es folgt mit großer Wahrscheinlichkeit (im Bereich von 20° bis 160° der Netzspannungshalbwelle) der Folgestrom aus dem Netz, der durch den Widerstand der Erdfehlerschleife begrenzt wird. Er löscht im ersten Nulldurchgang der Netzspannung, also bei einer Netzfrequenz von 50 Hz innerhalb von 10 Millisekunden. Seine Höhe beträgt meist einige Ampere bis zu einigen zehn Ampere. Liegt er höher, dann lösen die Überstromschutzorgane aus und schalten den Fehlerstrom meist in wenigen Millisekunden ab. Fig. 5 zeigt ein Oszillogramm eines derartigen Folgestromes und man erkennt die Löschung im Nulldurchgang.

Fehlerstromschutzschalter üblicher Bauform werden durch diese Folgeströme ausgelöst. Dies ist auch der Fall, wenn sie stoßstromfest sind, das heißt bei Stoßströmen von einigen hundert Ampere der Form 8/20 µs nicht auslösen. Sie werden aber durch Fehlerströme von wenigen Ampere, die einige Millisekunden fließen ausgelöst. Das ist ein großer Nachteil, weil dadurch Schäden, z.B. bei Tiefkühltruhen und -fächern entstehen. Selektive Fehlerstromschutzschalter der Bauform "S" weisen diesen Nachteil nicht auf, können aber für den Schutz bei direktem Berühren nicht verwendet werden, weil sie nicht innerhalb der 40 Millisekunden abschalten, eine Zeitspanne, die aus Gründen der Elektropathologie gefordert werden muß, um beim direkten Berühren aktiver Teile durch Menschen zu starke Elektrisierungen zu vermeiden.

Auch Überspannungsableiter mit Siliziumkarbidvaristoren können nach ihrem Ansprechen Folgeströme aus dem Netz verursachen, die höchstens eine Halbwelle der Netzspannung (10 ms bei 50 Hz) gegen Erde fließen. Deshalb muß um Fehlauslösungen zu vermeiden, verlangt werden, daß ein Fehlerstromschutzschalter, der vor Überspannungsableitern installiert wird, eine Auslösezeit über 10 ms hat. Dies wird in der DE-A-30 29 453 für eine Baueinheit, bestehend aus Fehlerstromschutzschalter und Überspannungsableitern verlangt. Für diese bekannte Baueinheit gilt aber, wie oben ausgeführt, daß sie weder für den Schutz bei direktem Berühren nach bei indirektem Berühren verwendet werden kann, wei keine obere Grenze für die Gesamtausschaltzeit angegeben ist.

Ein Verzögern des Abschaltens um eine Netzspannungshalbwelle ist aber nicht nur wegen der Fehlauslösungen durch Überspannungen notwendig. Wird ein Fehlerstromschutzschalter für den Zusatzschutz verwendet und schützt er z.B. mehrere Steckdosenstromkreise bei der Nullung, dann wird bei einem satten Masseschluß der Leitungsschutzschalter des betreffenden Stromkreises innerhalb weniger Millisekunden abschalten. Die derzeit verwendeten Fehlerstromschutzschalter schalten danach auch noch ab, ohne daß dies nötig wäre. Dadurch wird unnötigerweise die Verfügbarkeit der elektrischen Energie in den übrigen, nicht betroffenen, geschützten Stromkreisen beeinträchtigt.

Die GB-A-2056797 beschreibt einen Fehlerstromschutzschalter mit einem Gehäuse mit Anschlußklemmen für Installationsleitungen, in dem ein Kontaktapparat mit zugehörigem Schaltschloß, eine Prüfeinrichtung, ein Betätigungsorgan, ein Fehlerstromauslöser, ein Summenstromwandler und eine Elektronikschaltung untergebracht sind. Die Auslösezeit dieses Fehlerstromschutzschalters ist unabhängig vom Fehlerstrom immer größer als die Dauer einer Netzspannungshalbwelle (Seite 1, Zeile 108 bis Seite 2, Zeile 6).

In der GB-A-2056797 ist auf Seite 1, Zeilen 29 bis 39 darauf hingewiesen, daß der Fehlerstromschutzschalter innerhalb eines gewissen Bereiches eine minimale Auslösezeit haben soll, um Fehlauslösungen zu vermeiden, und auch Personenschutz gewährleisten (Seite 1, Zeilen 36 bis 39 und 74 bis 79) soll.

Der Erfindung liegt ausgehend von obigen Überlegungen, wonach ein Verzögern der Auslösezeit von Fehlerstromschutzschaltern der üblichen Bauform (G-Type) um mindestens eine Netzspannungshalbwelle bedeutende Vorteile für den praktischen Gebrauch derartiger Schalter bringen würde, die Aufgabe zugrunde, einen Fehlerstromschutzschalter so auszubilden, daß bei dem Fehlerstromschutzschalter für den Zusatzschutz nicht nur ein Minimalwert von einer Netzspannungshalbwelle für die Auslösezeit zur Vermeidung von Fehlauslösungen, sondern mit Rücksicht auf den Schutz bei direktem Berühren aktiver Teile und die Selektivität gegenüber den vorgeschalteten Fehlerstromschutzschaltern in selektiver Bauform entsprechend der Tabelle 1 auch Maximalwerte für die Gesamtausschaltzeit, die wegen der fehlenden Lichtbogendauer praktisch identisch mit dem Öffnungsverzug ist, eingehalten werden.

Erfindungsgemäß wird diese Aufgabe bei einem Fehlerstromschutzschalter der eingangs genannten Gattung durch die Merkmale des kennzeichneden Teils des Anspruchs gelöst.

Die Erfindung geht von folgenden Überlegungen aus:

Die Hauptgefahr beim Elektrounfall wird durch das Herzkammerflimmern gebildet. Die Flimmerschwelle in Abhängigkeit von der Durchströmungsdauer verläuft nun nicht etwa gleichmäßig fallend, sondern bleibt zunächst von etwa 10 ms bis zu einem Drittel der Dauer eines Herzschlages konstant, sinkt dann steil ab und behält für die Einwirkungsdauer über einer Herzperiode wieder einen konstanten Wert, der zehn- bis zwanzigmal niedriger liegt als für kurze Einwirkungsdauern.

Neuere Erkenntnisse der Physiologie (Biegelmeier, G., W.R.Lee: New considerations on the threshold of ventricular fibrillation for a.c. shocks at 50-60 Hz. IEE Proc. Vol. 127(1980), H.2, S.103-110) zeigen, daß diese "Z-Schwelle", das Herzkammerflimmern tiefe physiologische Ursachen hat und man kann bei einer Herzperiodendauer (HP) von 0,6 s den Zeitbereich für das Ende des oberen Flimmerniveaus, das im Amperebereich liegt und beim Niederspannungsunfall kaum je erreicht wird, mit 1/3 HP = 0,2 s konservativ festlegen. Die Internationale Elektrotechnische Kommission hat darüber hinaus noch rein konventionell eine Sicherheitskurve genormt, unterhalb der mit dem Auftreten von Herzkammerflimmern nicht mehr gerechnet wird (International Electrotechnical Commission: IEC-Report 479: Effects of current passing through the human body (second edition 1986), Chapter 2: Effects of alternating current in the range of 15 to 100 Hz).

Auch bei schwersten Elektrounfällen im Niederspannungsbereich (großflächige Umfassung, volle Netzspannung gegen Erde als Berührungsspannung) ist der Körperwiderstand so hoch, daß nur wenige hundert Milliampere Fehlerstrom fließen. Liegt die Abschaltzeit unter 0,2 s, dann ist das Auftreten von Kammerflimmern praktisch unmöglich. Wenn aber die volle Netzspannung gegen Erde (z.B. 240 V) als Fehlerspannung und damit im ungünstigsten Fall auch als Berührungsspannung auftritt, dann fließt bei dem für die Fehlerstromschutzschaltung maximal zulässigen Erdungswiderstand, der mit der Formel berechnet wird:

$$R_a = \frac{50 \ (V)}{I_{\Delta n} \ (A)} \ .$$

rund der 5-fache Nennfehlerstrom gegen Erde. Auch wegen der Stärke des elektrischen Schlages wird dabei die Abschaltung innerhalb der technisch zu realisierenden Abschaltzeiten verlangt, d.h., bei der üblichen Bauform innerhalb von 0,04 s und bei der selektiven Bauform innerhalb von 0,15 s, jedenfalls also innerhalb der kritischen Grenzzeit von 0,2 s.

Beim elektrischen Schlag treten auch Muskelreaktionen auf, die etwa dem physiologischen Reizgesetz I x t = const. folgen. Für die obere Grenze der Abschaltzeiten des erfindungsgemäßen Schutzschalters wird nun der Wert I x t, der durch Tabelle 1 beim 5-fachen Auslösenennstrom gegeben ist, mit 5 x $I_{\Delta n}$(A), 0,04 s, umgerechnet auf den reizgleichen Wert bei 0,15 s. Das ergibt rund den 1,5-fachen Auslösenennfehlerstrom. Die Wertepaare (5 x $I_{\Delta n}$, 0,04 s) und (1,5 x $I_{\Delta n}$ 0,15 s) bestimmen erfindungsgemäß die oberen Grenzen der Abschaltzeiten für den neuen Fehlerstromschutzschalter der Auslösekennlinie G, der gegen Fehlauslösungen durch Überspannungen sicher ist, wenn entsprechend dem Stand der Technik eine Mindestauslösezeit von zehn Millisekunden eingehalten wird.

Zum Erreichen der Auslösekennlinie beim erfindungsgemäßen Fehlerstromschutzschalter wird im Auslösekreis des Fehlerstromschutzschalters eine netzspannungsunabhängige Kurzzeitverzögerung eingebaut.

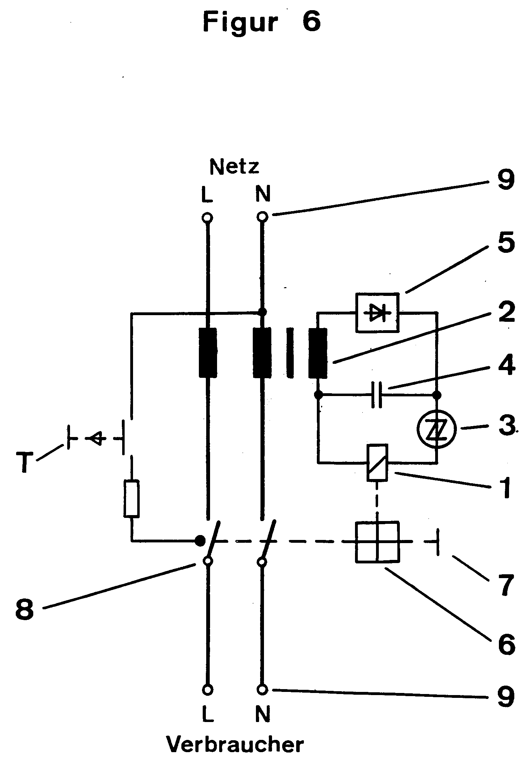

Dabei kann gemäß der Erfindung vorgesehen sein, daß die Elektronikschaltung eine netzspannungsunabhängige Speicherschaltung, umfassend eine Gleichrichterschaltung, einen Speicherkondensator und ein spannungsabhängiges Schallorgan, ist (Fig. 6).

Es handelt sich um einen Fehlerstromschutzschalter mit der an sich bekannten Energiespeicherauslösung (AT-B-197 468), die aber so dimensioniert wird, daß die erfindungsgemäß vorgegebenen Zeitwerte eingehalten werden.

Im folgenden wird die Erfindung an Hand der Zeichnungen näher beschrieben.

Fig. 1 stellt die Zusammenhänge zwischen der Auslösezeit, der Eigenzeit, dem Öffnungsverzug und der Gesamtausschaltzeit dar. Da wegen der geringeren Stromstärken kaum ein Lichtbogen entsteht, ist die Gesamtausschaltzeit praktisch gleich dem Öffnungsverzug. Der Fehlerstrom beginnt zur Zeit $t_0$ zu fließen und erreicht zur Zeit $t_1$ den Ansprechwert des Fehlerstromauslösers, der zur Zeit $t_2$ den Schaltmechanismus entklinkt. Zur Zeit $t_3$ werden die Kontakte getrennt.

Fig. 2 zeigt die Grenzwerte nach Tabelle 1 und die Auslösekennlinien eines selektiven Fehlerstromschutzschalters mit einem Nennwert des Auslösefehlerstromes $I_{\Delta n1}$ = 100 mA und eines Fehlerstromschutzschalters für den Zusatzschutz mit $I_{\Delta n2}$ = 30 mA, in der bisher üblichen Bauform (G-Type), dessen Auslösekennlinie strichliert gezeichnet ist. Man erkennt, daß die Auslosekennlinie in den Bereich der Fehlauslösungen führt, wodurch die oben erwähnten Nachteile auftreten. Der Fehlerstromschutzschalter in der neuen Bauform mit der Kennlinie G besitzt eine Auslösekennlinie (voll gezeichnet), die das Gebiet der Fehlauslösungen vermeidet und etwa dem Reizgesetz I x t = const. folgt. Die erfindungsgemäßen Grenzwerte sind in Fig. 2 durch Dreiecke in Kreisen dargestellt.

Fig. 3 zeigt das Oszillogramm einer Schaltüberspannung, die durch das Schalten eines Motors entstanden ist, der durch eine kabelähnliche Leitung angeschlossen war.

Fig. 4 zeigt eine 25 m lange Installationsleitung in einem metallenen Installationsrohr, die am Anfang mit einer Stoßspannung der Form 1,2/50 µs von einigen Kilovolt Scheitelwert beansprucht worden ist. Man erkennt, daß der Spannungsverlauf am Anfang und am Ende der Leitung praktisch identisch ist, also keine Laufzeiterscheinung auftritt.

In Fig. 5 ist der Folgestrom dargestellt, der nach dem Überschlag in der Installation durch die Stoßspannung über die leitend gewordene Luftstrecke als Lichtbogenentladung vom Netz zur Erde fließt. Die Netzspannung bricht während dieser Zeit bis auf die Brennspannung des Lichtbogens zusammen und der Netzfolgestrom löscht innerhalb einer Netzspannungshalbwelle (10 Millisekunden bei 50 Hz) im Nulldurchgang der Spannung.

Fig. 6 zeigt beispielhaft einen Fehlerstromschutzschalter mit einer netzspannungsunabhängigen Speicherschaltung, die erfindungsgemäß so dimensioniert wird, daß die vorher genannten Auslösewerte eingehalten werden.

Der Fehlerstromschutzschalter besteht aus einem Gehäuse mit Anschlußklemmen, in dem ein Kontaktapparat 8 mit dem zugehörigen Schaltschloß 6, eine Prüfeinrichtung T, ein Betätigungsorgan 7 und die Bauelemente zur Fehlerstromerfassung untergebracht sind. Sie bestehen aus einem Summenstromwandler 2 und einer netzspannungsunabhängigen Speicherschaltung mit den Bauelementen Gleichrichterschaltung 5, Speicherkondensator 4 und ladespannungsabhängigem Schaltorgan 3 sowie einem Fehlerstromausloser 1.

Der erfindungsgemäße Fehlerstromschutzschalter mit Kurzzeitverzögerung besteht aus einem Gehäuse mit Anschlußklemmen 9 für die Installationsleitungen. Im Gehäuse ist der Kontaktapparat 8 mit dem zugehörigen Schaltschloß 6, die Prüfeinrichtung T, das Betätigungsorgan 7, ein Fehlerstromauslöser 1, ein Summenstromwandler 2 und eine netzspannungsunabhängige Elektronikschaltung 3, 4, 5, untergebracht. Die Auslösezeit des Fehlerstromschutzschalters ist unabhängig vom Fehlerstrom immer größer als die Dauer einer Netzspannungshalbwelle, beispielsweise 10 ms bei 50 Hz. Bei diesem Fehlerstromschutzschalter ist durch die Elektronikschaltung eine Auslösung des Fehlerstromschutzschalters nach Überschreiten des Auslösegrenzwertes des Fehlerstromes, nämlich dem 0,5- bis 1,0-fachen des Nennwertes des Auslösefehlerstromes, mit folgenden Gesamtausschaltzeiten (Öffnungsverzug) sichergestellt (Fig. 2):

1. Nach dem Überschreiten des 1,5-fachen Nennwertes des Auslösefehlerstromes weniger als ein Drittel der Herzperiodendauer (HP), höchstens jedoch 0,15 Sekunden und

2. nach Überschreiten des fünffachen Nennwertes des Auslösefehlerstromes weniger als 40 Millisekunden.

**Patentansprüche**

1. Fehlerstromschutzschalter, bestehend aus einem Gehäuse mit Anschlußklemmen (9) für Installationsleitungen, in dem ein Kontaktapparat (8) mit zugehörigem Schaltschloß (6), eine Prüfeinrichtung (T), ein Betätigungsorgan (7), ein Fehlerstromauslöser (1), ein Summenstromwandler (2) und eine Elektronikschaltung (3, 4, 5) untergebracht sind, wobei der Fehlerstromschutzschalter auslöst, wenn der Fehlerstrom das 0,5- bis 1,0-fache des Nennwertes des Auslösefehlerstromes überschreitet, und die Auslösekennlinie im wesentlichen dem physiologischen Reizgesetz I x t = konstant (I = Auslösefehlerstrom, t = Gesamtausschaltzeit) folgt, dadurch gekennzeichnet, daß die Elektronikschaltung eine netzspannungsunabhängige Speicherschaltung, umfassend eine Gleichrichterschaltung (5), einen Speicherkondensator (4) und ein spannungsabhängiges Schaltorgan (3), ist, daß die Auslösezeit unabhängig vom Fehlerstrom immer größer ist als die Dauer einer Netzspannungshalbwelle und bei einer Frequenz von 50 Hz größer als 10 Millisekunden ist, daß die Gesamtausschaltzeit des Fehlerstromschutzschalter bei einem Fehlerstrom, der größer ist als das 1,5-fache des Nennwertes des Auslösefehlerstromes, höchstens 150 Millisekunden, d.h. weniger als ein Drittel der Herzperiodendauer (HP) beträgt, daß die Gesamtausschalttzeit des Fehlerstromschutzschalters bei einem Fehlerstrom, der größer ist als das fünffache des Nennwertes des Auslösefehlerstromes, weniger als 40 Millisekunden beträgt, und daß die Gesamtausschaltzeit in Abhängigkeit vom Auslösefehlerstrom im Bereich zwischen dem 1,5-fachen und dem fünffachen des Nennwertes des Auslösefehlerstromes im wesentlichen dem physiologischen Reizgesetz I x t = konstant folgt.

## Claims

1. Fault current circuit breaker, consisting of a housing with connecting terminals (9) for installation lines, which housing accommodates a contact appliance (8) with associated switch lock (6), a testing device (T), an actuating device (7), a fault current tripping device (1), a sum current transformer (2) and an electronic circuit (3, 4, 5), wherein the fault current circuit breaker is tripped when the fault current exceeds 0.5 to 1.0 times the nominal value of the tripping fault current, and the tripping characteristic substantially follows the physiological law of stimulus I x t = constant (I = tripping fault current, t = total cut-out time), characterised in that the electronic circuit is a storage circuit which is independent of the mains voltage and comprises a rectifier circuit (5), a storage capacitor (4) and a voltage-dependent switching relay (3), that the tripping time irrespective of the fault current is always greater than the duration of a mains voltage half wave and at a frequency of 50 Hz is greater than 10 milliseconds, that in the case of a fault current which if greater than 1.5 times the nominal value of the tripping fault current the total cut-out time of the fault current circuit breaker is at most 150 milliseconds, i.e. less than one third of the Hertz period, that in the case of a fault current which is greater than five times the nominal value of the tripping fault current the total cut-out time of the fault current circuit breaker is less than 40 milliseconds,, and that the total cut-out time as a function of the tripping fault current in the range between 1.5 times and five times the nominal value of the tripping fault current substantially follows the physiological law of stimulus I x t = constant.

## Revendications

1. Interrupteur de protection à courant de défaut, constitué d'un carter avec des bornes de connexion de raccordement (9) pour des lignes d'installation, dans lequel sont disposés un appareil de contact (8) avec verrou de maintien (6) adjoint, un dispositif d'essai (T), un organe d'actionnement (7), un disjoncteur à courant de défaut (1), un transformateur de courant cumulé (2) et un montage électronique (3, 4, 5), l'interrupteur de protection à courant de défaut se déclenchant lorsque le courant de défaut dépasse une valeur de 0,5 à 1,0 fois la valeur caractéristique du courant de défaut de déclenchement et la courbe caractéristique de déclenchement suivant essentiellement la loi d'excitation physiologique I x t = constante (I = courant de défaut de déclenchement, t = durée totale de coupure),
caractérisé en ce que le montage électronique est un montage de mémoire dépendant de la tension de réseau comprenant un montage en redresseur (5), un condensateur de mémoire (4) et un organe de commutation (3) dépendant de la tension, que la durée de déclenchement, indépendamment du courant de défaut, est toujours supérieure à la durée d'une demi-onde de la tension de réseau et, pour une fréquence de 50 Hz, est supérieure à 10 millisecondes, que la durée totale d'interruption de l'interrupteur de protection à courant de défaut est, pour un courant de défaut qui est supérieur à 1,5 fois la valeur caractéristique du courant de défaut de déclenchement, égale au plus à 150 millisecondes, c'est-à-dire inférieure à un tiers de la période de coeur, que la durée totale d'interruption de l'interrupteur de protection à courant de défaut est, pour un courant de défaut qui est supérieur au quintuple de la valeur caractéristique du courant de défaut de déclenchement, inférieure à 40 millisecondes et que la durée totale d'interruption suit essentiellement la loi d'excitation physiologique I x t = contante en dépendance du courant de défaut de déclenchement dans la plage entre 1,5 fois et le quintuple de la valeur caractéristique du courant de défaut de déclenchement.

# Figur 1

Schaltstückweg

$t_0$  $t_1$  $t_2$  $t_3$  $t_4$  t

Auslösezeit

Eigenzeit

Lichtbogendauer

Öffnungsverzug

Gesamtausschaltzeit

Figur 2

EP 0 285 594 B1

# Figur 3

# Figur 4

Stoßwelle 1,2/50 µs

l = 25 m

L
PE
N

leitfähiges Installationsrohr

1 V     1 µs

# Figur 5

Netzspannung

Netzfolgestrom

# Figur 6